# EUROPEAN PATENT APPLICATION

(11) **EP 4 670 936 A1**
(43) Date of publication of application: **31.12.2025**
(21) Application number: 25182618.6
(22) Date of filing: 13.06.2025
(51) Int. Cl.: B27B 5/065, B23D 47/04, B23D 59/00, B27G 19/02

(54) **OPERATING METHOD OF A PANEL CUTTING MACHINE FOR THE CONTROL OF OUTPUT PANELS**

(30) Priority: 24.06.2024 IT 202400014449
(71) Applicant: SCM Group S.p.A., 47921 Rimini (RN) (IT)
(72) Inventor: SCALAVINO, Giuseppe, 47921 RIMINI (IT); MANDOLESI, Stefano, 47921 RIMINI (IT)
(74) Representative: Tiburzi, Andrea

(57) **Abstract**

The present invention relates to a method of operation (100) of a cutting machine (1) for cutting panels (P) made of wood, fiberglass, plastic and the like, wherein said sawing machine (1) comprises: a working surface (2), for supporting at least one panel (P) to be cut; a pusher (21) having one or more clamps (211), for moving said at least one panel (P) to be cut on said working surface (2) in a advancement direction (A); a cutting unit (3), for cutting said panel (P) along a cutting line (31); and an outlet section (4), comprising one or more output shelves (41), having a predefined extension, to support the panels cut (P') by said cutting unit (3), wherein said cutting line (31) is arranged between the working surface (2) and said outlet section (4); wherein said operating method (100) comprises the steps of: determining (110) the occupation of said output shelves (41) by said cut panels (P'); and blocking (120) said pusher (21), so as not to further sectioning the panel (P), when said cut panels (P') almost completely occupy said output shelves (41).

## Description

The present invention relates to an operating method of a cutting machine for the control of output shelves.

### Field of invention

More specifically, the invention concerns a cutting machine of the type mentioned above, designed and built in particular to avoid the accidental fall of cutting pieces from the output shelves.

In the following, the description will be addressed to a wood cutting machine, but it is clear that it should not be considered limited to this specific use.

### Prior art

As is well known, cutting machines are widely used in the wood, plastic, fiberglass and similar machining industries, for cutting panels of various sizes.

These machines are equipped with a cutting line and a pusher with clamps that transport the panels across the worktable for subsequent cutting. Downstream of the cutting line, Bakelite shelves receive the cut pieces and are designed to be configured in different arrangements based on production needs and available space.

Despite the efficiency of cutting machines, there are significant technical problems associated with the management of cutting outgoing panels, especially when dealing with large pieces.

A frequent problem is the limited length of the Bakelte shelves. These can be shorter than the maximum size of the workable panel. This requires the operator to manually remove the cut pieces before the pusher pushes them beyond the limit of the Bakelite table, potentially causing the workpiece to fall. This system requires constant attention from the operator, who must avoid distractions to prevent accidents and damage to the material.

Further technical problems arise during the panel trimming step. The need to trim both the head and the tail of long panels leads to situations where, after the head and tail cut, the panel may be too long and unstable. When the presser is raised, if the panel is not adequately supported, the panel may fall. Furthermore, the possible presence of full shelves further complicates the work of the operator, who must remove the machined pieces in good time to avoid overloading the shelves and the risk of the cut materials falling.

The technical problems indicated highlight a significant limitation in the standard configurations of cutting machines.

It is evident that this procedure is costly also in economic terms, since in case of operator distraction, pieces may fall and be damaged.

### Purpose of the invention

In light of the above, it is therefore the purpose of the present invention to provide a cutting machine that overcomes the limits of standard configurations, reducing the need for manual intervention by the operator to remove the cut pieces and prevent them from falling.

Another aim of the invention is to improve safety in the work environment by integrating automatic or semi-automatic systems that manage the expulsion and support of the cut panels, thus avoiding risks related to the falling of materials during cutting and trimming operations.

It is also aim of the present invention to provide a solution that allows the Bakelite output shelves to be adapted more flexibly to the dimensions of the panels being machined, ensuring optimal support for all types of panels, regardless of their dimensions, and thus reducing the risk of damage or production interruptions caused by ineffective management of the cut pieces.

### Object of the invention

It is, therefore, specific object of the present invention a method of operation of a cutting machine for cutting panels made of wood, fiberglass, plastic and the like, wherein said sawing machine comprises: a working surface, for supporting at least one panel to be cut; a pusher having one or more clamps, for moving said at least one panel to be cut on said working surface in an advancement direction; a cutting unit, for cutting said panel along a cutting line; and an outlet section, comprising one or more output shelves, having a predefined extension, to support the panels cut by said cutting unit, wherein said cutting line is arranged between the working surface and said outlet section; wherein said operating method comprises the steps of: determining the occupation of said output shelves by said cut panels; and blocking said pusher, so as not to further sectioning the panel, when said cut panels almost completely occupy said output shelves.

Always according to the invention, said determining step may comprise the following sub-steps: acquiring the size of said output shelves; acquiring a cutting plane of said panel to be cut using said cutting unit; and calculating the occupation of said output shelves according to the size of said output shelves and the cutting plane of said panel to be cut, so as to detect when said output shelves are occupied by said cut panels.

Still according to the invention, said determination step may comprise the following sub-step: acquiring the dimensions of each panel to be cut.

Advantageously according to the invention, said cutting machine may comprise at least one optical detector, arranged so as to detect the occupation of said support surfaces by said cut panels, and said determination step may comprise the sub-step of detecting, by means of said optical detector, the occupation of said support planes while said cutting unit sections said panel.

Further according to the invention, said optical detector may be a camera, and/or an infrared detector, and/or a photocell or the like.

Always according to the invention, said method may comprise the following step: emitting a warning signal when the cut pieces of one or more panels occupy almost completely or completely said output shelves.

Still according to the invention, said machine may comprise at least one supporting shelve for trimming, arranged parallel to said output shelves and having a length greater than said output shelves, and said method may comprise the step of trimming said cut panels.

Further according to the invention, said trimming step may comprise the following sub-step: rotating a cut panel placing it on said trimming supporting shelve; positioning said cut panel on said cutting line; blocking said cut panel in position using at least one of said clamps of said pusher; activating said cutting unit, so as to section said cut panel.

Advantageously according to the invention, said steps of positioning and blocking in position said cut panel in order to cut said cut panel at the ends or at intermediate points may be repeated.

Preferably according to the invention, said rotation step may involve a rotation of the cut panel of approximately 90°.

It is also object of the present invention a cutting machine for cutting panels made of wood, fiberglass, plastic and the like, wherein said cutting machine comprises a working surface, to support at least one panel to be cut, a pusher having one or more clamps, for moving said at least one panel on said working surface in an advancement direction, and a cutting unit, for cutting said panel along a cutting line, an outlet section, comprising one or more output shelves, having a predefined extension, to support the panel portions cut by said cutting unit, wherein said cutting line is arranged between the working surface and said exit section, a central control unit, for controlling said pusher and said cutting unit, characterized in that said central control unit is configured to carry out the steps of the operating method as defined above.

Always according to the invention, said machine may comprise at least one optical detector arranged so as to detect the occupation of said support surfaces by the cut parts of said panel.

Still according to the invention, said optical detector may be a camera, and/or an infrared detector, and/or a photocell or the like.

Advantageously according to the invention, said machine may comprise at least one trimming supporting shelve, arranged parallel to said supporting shelves and having a length greater than said support shelves.

It is also object of the present invention a computer program comprising instructions which, when the program is executed by a computer, cause the computer to execute the steps of the method described above.

It is further object of the present invention a computer-readable storage medium comprising instructions which, when executed by a computer, cause the computer to execute the method steps described above.

### Brief description of the figures

The present invention will be now described, for illustrative but not limitative purposes, according to its preferred embodiments, with particular reference to the figures of the enclosed drawings, wherein:
figure 1 shows a perspective view of a first embodiment of a panel cutting machine according to the present invention;
figure 2 shows a top view of a portion of the cutting machine according to figure 1;
figure 3 shows a flow chart of the operating method of the cutting machine according to the present invention;
figure 4 shows a flowchart relating to a specific step of the method in figure 3;
figure 5 shows a flowchart relating to one step of the method in figure 3;
figure 6 shows a flowchart of a further step of the operating method of the cutting machine according to the present invention;
figure 7 shows a top view of a cutting machine in which the support shelves are entirely occupied by cut panels; and
figure 8 shows a top view of figure 7 which schematically shows the trimming steps of a cut panel.

### Detailed description

In the various figures, similar parts will be indicated with the same numerical references.

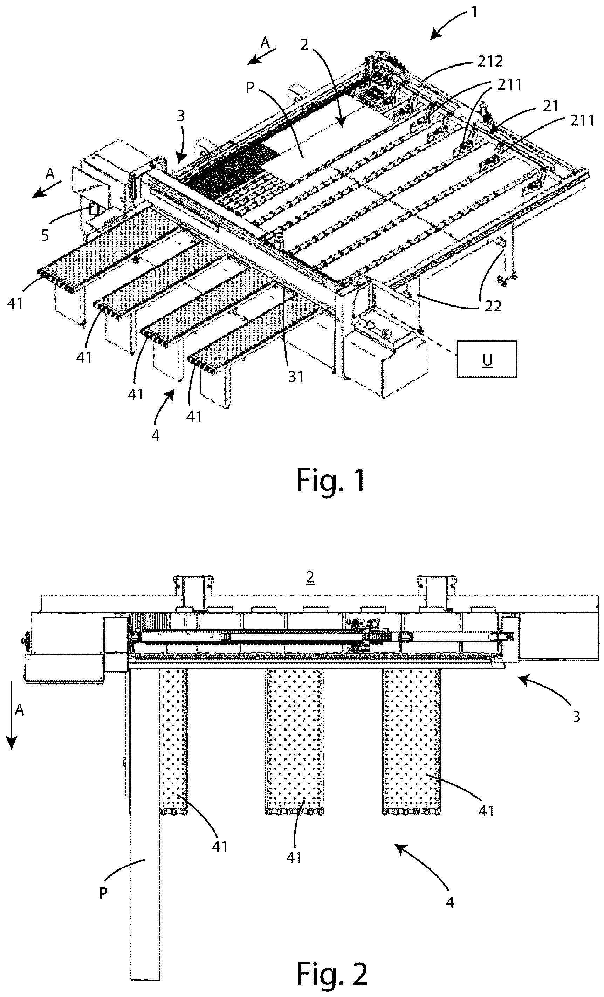

Referring to figures 1 and 2, a cutting machine, indicated overall with the numerical reference 1 can be observed.

The cutting machine 1 is intended primarily, but not exclusively, for cutting panels P made of wood, fiberglass, plastic and similar materials.

The cutting machine 1 mainly comprises a working surface 2, a cutting unit 3 and an outlet section 4.

The working surface 2 allows the positioning of at least one panel P to be cut. The construction material of the working surface 2 can vary to adapt to the different needs of the materials to be cut, such as panels of different hardness and sensitivity.

The working surface 2 is integrated into a support base 22.

The working surface 2 also comprises a pusher 21, comprising a transverse frame 212, arranged parallel to the cutting unit 3, and transversely to an advancement direction A of the panels to be cut P. Said transverse frame is movable in an advancement direction A, transverse to said cutting line.

The pusher 21 is equipped with one or more clamps 211, arranged substantially parallel but which can move both along the frame 212 and in the advancement direction A of the panels to be cut P.

The pusher 21 is designed to move the panels to be cut P on the working surface 2 blocked with one or more clamps 211, along said advancement direction A.

The 211 clamps can be of different types to adapt to the various panel materials, allowing a safe and stable grip during movement, essential for cutting precision.

The clamps 211 are generally of the hydraulic type or operated by compressed air. However, other embodiments may be envisaged, in which said clamps 211 may also be operated by electric actuators.

The cutting machine 1 also comprises a cutting unit 3 designed to section the panel to be cut P along a cutting line 31, arranged perpendicular to the advancement direction of the panels to be cut P.

Said cutting unit 3 can use different cutting technologies. In the case of wooden panels to be cut P, said cutting unit 3 is generally equipped with a rotating blade (not shown in the figures). In other embodiments, for cutting other materials, said cutting unit can comprise cutting means such as lasers or the like.

The outlet section 4 of the cutting machine 1 arranged downstream of said cutting line 31, in the direction of said advancement direction A, comprises one or more output shelves 41, generally made of Bakelite, which project from the working surface 2.

The output shelves 41 have a predefined extension to support the cut panel portions P'. The arrangement, size and number of the output shelves 41 can vary to support different types and sizes of cut panels P', according to needs.

In some embodiments (such as the one shown in figure 2) the machine 1 can comprise at least one trimming supporting shelve 42, positioned parallel to the output shelves 41 but with a greater length. This allows managing cut panels P' of larger dimensions or to carry out additional trimming operations on the cut parts as better explained below.

The cutting line 32 is arranged between the working surface 2 and the outlet section 4, optimizing the path of the panel P from the cutting step to the exit and storage step on said output shelves 41.

The cutting machine 1 also comprises a central control unit U, suitable for coordinating the operation of the pusher 21 and the cutting unit 3.

The central control unit U is programmable to perform specific cutting sequences and to adapt to different cutting patterns, improving the operational flexibility of the machine 1 itself.

This central control unit U is also programmable to allow operators to configure and store different cutting profiles specific to various types of materials such as wood, fiberglass and plastic.

In some embodiments, the central control unit U is equipped with a user interface for displaying detailed information about the cutting process, allowing the entry of operating parameters, alarms and maintenance reminders. The interface may be a display *touch screen,* which facilitates intuitive interaction with the operator.

The central control unit U for the panel P cutting machine 1 may be based, in some embodiments, on a microprocessor.

In other embodiments, the central control unit U may be a PLC (Programmable Logic Controller). PLCs are particularly suitable for industrial applications due to their reliability and robustness. PLCs can be programmed to perform specific cutting cycles and the coordination of machine parts 1.

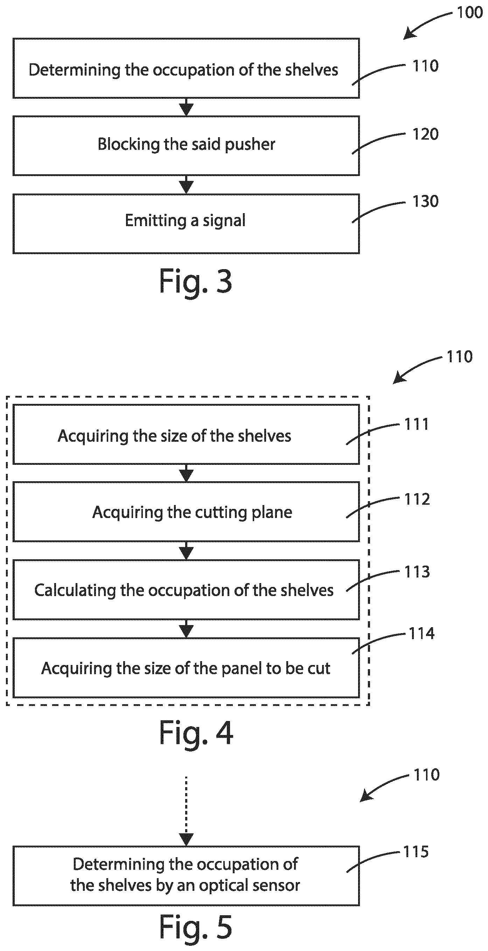

In some embodiments (figure 5), the cutting machine 1 can comprise at least one optical detector 5, arranged, so as to detect the occupation of the output shelves 41 of the cut panels P' by said cutting unit 3.

Said optical detector 5 may be a camera, an infrared detector, a photocell or the like.

The optical detector 5 is designed to detect the position and state of the cut panels P' on said support surfaces 41, to detect when they are occupied and prevent them from falling, as will be better described below.

The operation of the cutting machine 1 described above is as follows.

Referring to figures 3 and 4, a method of operation 100 of the cutting machine 1 for cutting P panels is observed.

The method 100 comprises a first step of determining 110 the occupation of the output shelves 41 by the cut panels P'.

In one embodiment, the determination step 110 occurs by acquiring (step 111) the sizes of the output shelves 41 from the panel to be cut P. This can be done automatically, e.g., by means of an optical system or by reading barcodes that report the characteristics of the panel to be cut P, or by means of a manual data entry procedure by the operator. Subsequently, the central control unit acquires 112 the cutting plane of the panel to be cut P, and calculates (step 113) based on these dimensions how much to cut the panel P by means of the cutting unit 3.

This information is entered into the central control unit U via an interface (e.g., touch on screen display) by an operator.

When the output shelves 41 are almost completely occupied, the method 100 provides for blocking 120 (by means of a command generated by said central control unit U) the pusher 21 to prevent further movements of the panel P, which could lead to interference or damage to the panels already present.

The user will be able, with an appropriate manual command, to unlock and restart the operation of the cutting machine 1 once the blocking step 120 is active.

In a further embodiment, the method 100 may comprise the use of at least one optical detector 5 (e.g., a camera, an infrared detector or a photocell), to detect (step 115; see figure 5) the actual occupancy of the output shelves 41 in real time. This optical detection system allows for immediate feedback on the capacity/occupancy of the support shelves 41 and to adjust the operations of the machine 1 accordingly.

The operating method 100 of the cutting machine 1 may provide for the emission 130 of a warning signal when the cut pieces P' almost completely occupy the output shelves 41, thus signaling the need to intervene to manage the materials or modify the operation of the machine 1.

In some embodiments the detection step 115 by the optical detector 5 of the determination step 110 can be combined with or alternatively with the determination steps 110 (i.e. the acquisition steps 111 and 112, calculation steps 113 and acquisition steps 114) of figure 4.

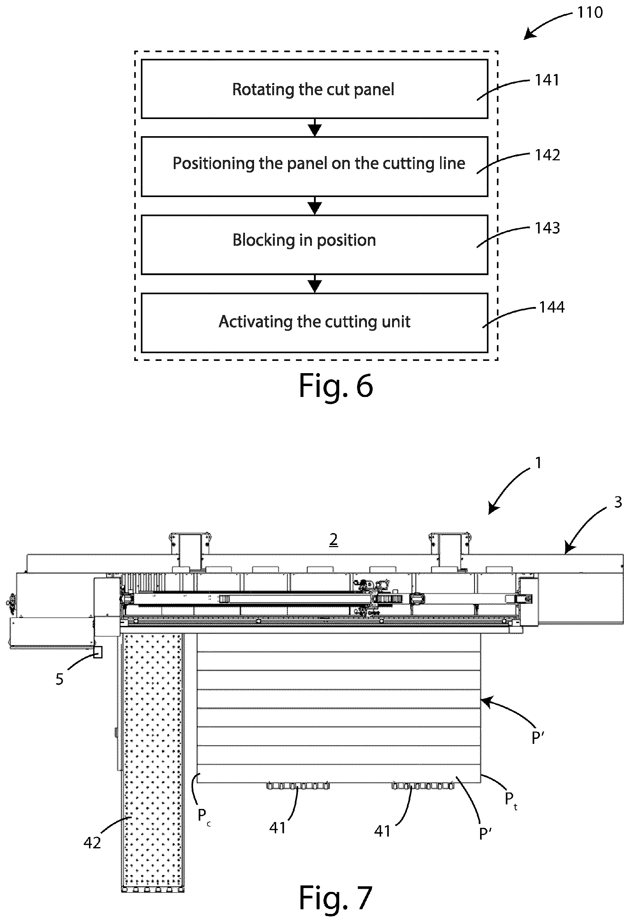

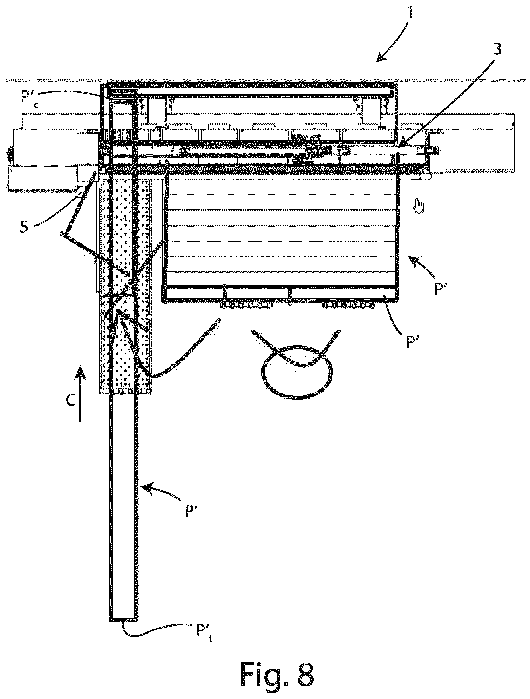

The operating method 100 of the cutting machine 1 provides for a further trimming step 40 (see figures 6, 7 and 8), which can be activated when necessary, for the cut panels arranged on the trimming supporting shelve 42, as shown for example in figure 7. This allows the cut panels P' to be positioned (step 142, shown in the arrow B of figure 8), blocked (step 143; again see figure 8) and further cut (step 144), thus allowing further customization of the dimensions or shapes of the finished pieces, with the possibility of rotating the panels 141 by approximately 90° to facilitate transverse cuts.

More specifically, a cut panel P', preferably the outermost, i.e. the furthest of the other cut panels P' from the cutting line 31, as highlighted in figure 8, once rotated by 90° (arrow B), is placed on the trimming supporting shelve 42.

Subsequently, the panel P' is positioned 142 on the cutting line 31, moving it in the direction of the arrow C (which has a direction opposite to that of the advancement direction A), blocking it in position in step 143 by means of the pusher 21, and in particular by means of at least one clamp 211. Subsequently (step 144), the cutting unit 3 is operated to section the cut panel P'.

In the positioning step 142 and locking in position 143 of the panel P', it is possible to cut the head ends P't and/or tail P'_{c} or intermediate points of the panel P'. When cutting the tail end P'_{c} the blocking of the P' panel by means of the pusher 21 prevents the P' panel itself from overturning, with serious danger for the operator.

### Advantages

An advantage of the present invention is to implement a function that increases the safety and operational efficiency of cutting machines, preventing the accidental fall of pieces during inspection by operators. This feature not only protects the pieces from potential damage resulting from falls, but also safeguards operators from possible injuries caused by impact with the pieces themselves.

Another advantage of the present invention is that it significantly reduces the risk of distractions during operations, increasing the overall safety of the production process.

Another advantage of the present invention is that it has a low production cost, since it may only require the addition of a button to activate the function and the implementation of a computer function, thus avoiding the need to restart the production cycle.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method of operation (100) of a cutting machine (1) for cutting panels (P) made of wood, fiberglass, plastic and the like, wherein said sawing machine (1) comprises:
a working surface (2), for supporting at least one panel (P) to be cut;
a pusher (21) having one or more clamps (211), for moving said at least one panel (P) to be cut on said working surface (2) in an advancement direction (A);
a cutting unit (3), for cutting said panel (P) along a cutting line (31); and
an outlet section (4), comprising
one or more output shelves (41), having a predefined extension, to support the panels cut (P') by said cutting unit (3),
wherein said cutting line (31) is arranged between the working surface (2) and said outlet section (4);
wherein said operating method (100) comprises the steps of:
determining (110) the occupation of said output shelves (41) by said cut panels (P'); and
blocking (120) said pusher (21), so as not to further sectioning the panel (P), when said cut panels (P') almost completely occupy said output shelves (41).

2. Method (100) according to claim 1, **characterized in that** said determining step (110) comprises the following sub-steps:
acquiring (111) the size of said output shelves (41);
acquiring (112) a cutting plane of said panel to be cut (P) using said cutting unit (3); and
calculating (113) the occupation of said output shelves (41) according to the size of said output shelves (41) and the cutting plane of said panel to be cut (P), so as to detect when said output shelves (41) are occupied by said cut panels (P').

3. Method (100) according to the preceding claim, **characterized in that** said determination step (110) comprises the following sub-step:
acquiring (114) the dimensions of each panel to be cut (P).

4. Method (100) according to any one of the preceding claims, **characterized**
**in that** said cutting machine (1) comprises at least one optical detector (5), arranged so as to detect the occupation of said support surfaces (41) by said cut panels (P'), and
**in that** said determination step (110) comprises the sub-step of detecting (115), by means of said optical detector (5), the occupation of said support planes (41) while said cutting unit (3) sections said panel (P).

5. Method (100) according to the preceding claim, **characterized in that** said optical detector (5) is a camera, and/or an infrared detector, and/or a photocell or the like.

6. Method (100) according to any one of the preceding claims, **characterized in that** it comprises the following step:
emitting (130) a warning signal when the cut pieces of one or more panels (P) occupy almost completely or completely said output shelves (41).

7. Method (100) according to any one of the preceding claims, **characterized in that** said machine (1) comprises at least one supporting shelve for trimming (42), arranged parallel to said output shelves (41) and having a length greater than said output shelves (41), and
**in that** said method (100) comprises the step of trimming (140) said cut panels (P').

8. Method (100) according to the preceding claim, **characterized in that** said trimming step (140) comprises the following sub-step:
rotating (141) a cut panel (P') placing it on said trimming supporting shelve (42);
positioning (142) said cut panel (P') on said cutting line (31);
blocking said cut panel (P') in position (143) using at least one of said clamps (211) of said pusher (21);
activating (144) said cutting unit (3), so as to section said cut panel (P').

9. Method (100) according to the preceding claim, **characterized in that** of repeating said steps of positioning (142) and blocking in position (143) said cut panel (P') in order to cut said cut panel (P') at the ends (P'ₜ, P'_{c}) or at intermediate points.

10. Method (100) according to any one of claims 8 or 9, **characterized in that** said rotation step (141) involves a rotation of the cut panel (P') of approximately 90°.

11. Cutting machine (1) for cutting panels (P) made of wood, fiberglass, plastic and the like, wherein said cutting machine (1) comprises
a working surface (2), to support at least one panel (P) to be cut,
a pusher (21) having one or more clamps (211), for moving said at least one panel (P) on said working surface (2) in an advancement direction (A), and
a cutting unit (3), for cutting said panel (P) along a cutting line (31),
an outlet section (4), comprising
one or more output shelves (41), having a predefined extension, to support the panel portions (P) cut by said cutting unit (3),
wherein said cutting line (32) is arranged between the working surface (2) and said exit section (4),
a central control unit (U), for controlling said pusher (21) and said cutting unit (3),
**characterized in that** said central control unit (U) is configured to carry out the steps of the operating method (100) according to any one of claims 1-10.

12. Machine (1) according to the preceding claim, **characterized in that** it comprises at least one optical detector (5) arranged so as to detect the occupation of said support surfaces (41) by the cut parts of said panel (P).

13. Machine (1) according to the preceding claim, **characterized in that** said optical detector (5) is a camera, and/or an infrared detector, and/or a photocell or the like.

14. Machine (1) according to the preceding claim, **characterized in that** said machine (1) comprises at least one trimming supporting shelve (42), arranged parallel to said supporting shelves (41) and having a length greater than said support shelves (41).

15. A computer program comprising instructions which, when the program is executed by a computer, cause the computer to execute the steps of the method according to any of claims 1-10.

16. A computer-readable storage medium comprising instructions which, when executed by a computer, cause the computer to execute the method steps according to any of claims 1-10.
